# EUROPEAN PATENT SPECIFICATION

(11) **EP 3 666 512 B1**
(45) Date of publication and mention of the grant of the patent: **14.07.2021**
(21) Application number: 19215830.1
(22) Date of filing: 12.12.2019
(51) Int. Cl.: B29D 30/24

(54) **BUILDING CAN FOR BUILDING A TYRE CARCASS**
BAUGEFÄSS ZUM AUFBAU EINER REIFENKARKASSE
BOÎTE DE CONSTRUCTION POUR CONSTRUIRE UNE CARCASSE DE PNEU

(30) Priority: 12.12.2018 IT 201800011017
(43) Date of publication of application: 17.06.2020
(73) Proprietor: Marangoni Meccanica S.P.A., 38068 Rovereto (IT)
(72) Inventor: LENTI, Massimo, 38068 Rovereto (TN) (IT); WEBER, Michele, 38068 Rovereto (TN) (IT)
(74) Representative: Giannini, Manuela

(56) References cited:
- WO-A1-2015/194940
- US-A- 2 655 977
- US-A- 3 038 526

## Description

### CROSS-REFERENCE TO RELATED APPLICATIONS

This patent application claims priority from Italian patent application no. 102018000011017 filed on December 12, 2018.

### TECHNICAL FIELD

The present invention relates to a building can for producing a tyre carcass.

### BACKGROUND ART

For producing a tyre carcass, it is known to overlap a plurality of rubber-coated plies and to press them, one on top of the other, generally by means of a rolling process to eliminate any air bubbles and bring the plies to adhere to each other so as to produce a homogeneous tubular body. The axially opposite free end portions of the tubular body itself are then deformed inwards and folded back on themselves so as to produce corresponding annular channels each one adapted for housing a corresponding heel ring.

The building operations described above are carried out using a carcass-building group, which comprises a motor-driven building drum that is rotatable about its own horizontal axis and having an outer cylindrical supporting surface for the rubber-coated plies. The group then comprises a further pair of supporting drums adapted for being arranged on axially opposite sides of the building drum and commonly known as "building cans". The cans, which are nothing more than common fixed-diameter drums, each have their own outer cylindrical supporting surface, which has an outer diameter equal to the diameter of the building drum. During the overlapping step and the subsequent ply-rolling step, the cans are kept close to the building drum and their outer surfaces form opposite prolongations of the supporting surface of the building drum itself.

Before the subsequent deformation step of the above-mentioned end portions, the cans are moved away from the building drum, allowing the plies constituting the corresponding end portions to protrude, overhanging, from the building drum and, thus, to be deformed and folded back.

Although universally used, the known building groups are not very satisfactory, especially because they do not allow for improvements in the quality level of the built carcass. In many cases, in fact, the carcasses have surface defects and, sometimes, even structural defects, such as streaks, lines, and localised deformations.

Experimentally, it was observed that the above defects are essentially due to the formation of misalignments between the surfaces of the drum and those of the cans that inevitably occur as a result of play and inevitable wear due to continuous bringing near and spacing apart of the cans.

In addition to this, the removal of the cans after the rolling step is, in some cases, difficult as a result of partial bonding between the rubber-coated plies and the cans themselves and this generates, in some cases, unwanted tensioning, deformations, and rigidity of the plies.

The removal, the moving away, and the temporary storage of known cans require a large spaces for manoeuvring, the use of dedicated handling equipment, which is also cumbersome in itself, and the use of expert personnel. For these reasons, the known groups are relatively expensive both in terms of production and management.

Patent document US 3,038,526 A discloses a tyre building apparatus having the features of the preamble of claim 1.

### DISCLOSURE OF INVENTION

The purpose of the present invention is to produce a building can for building a tyre carcass, the production features of which allow the problems described above to be solved in a simple and economic manner and, in particular, allow the production of tyre carcasses of a high and unvarying structural, geometrical, and dimensional quality.

According to the present invention, a building can for building tyre carcasses is provided, as claimed in claim 1.

### BRIEF DESCRIPTION OF THE DRAWINGS

The invention will now be described with reference to the accompanying drawings, which show a non-limiting embodiment thereof, wherein:
- Figure 1, shows, in cross-section and substantially in block diagrams, a preferred embodiment of a building group for producing a tyre carcass, having building cans produced according to the dictates of the present invention;
- Figures 2 to 5 are similar figures to Figure 1 and partially show the plant from Figure 1 in four different functional conditions;
- Figures 6 and 7 show, in cross-section, two different steps for building the tyre carcass;
- Figures 8 and 9 show, in perspective view and on an enlarged scale with parts removed for clarity, the building can according to the invention arranged in two different functional conditions; and
- Figures 10 and 11 show, in perspective view and greatly enlarged, a detail from Figure 8 and, respectively, a detail from Figure 9.

### BEST MODE FOR CARRYING OUT THE INVENTION

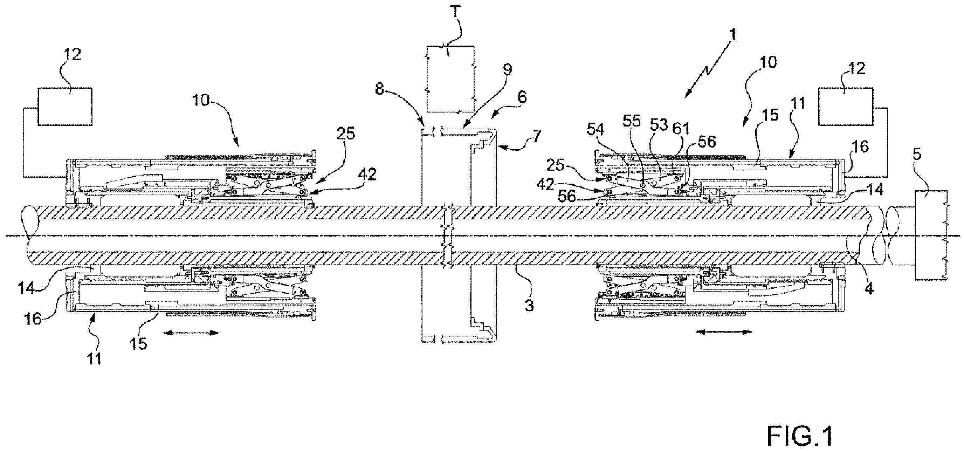

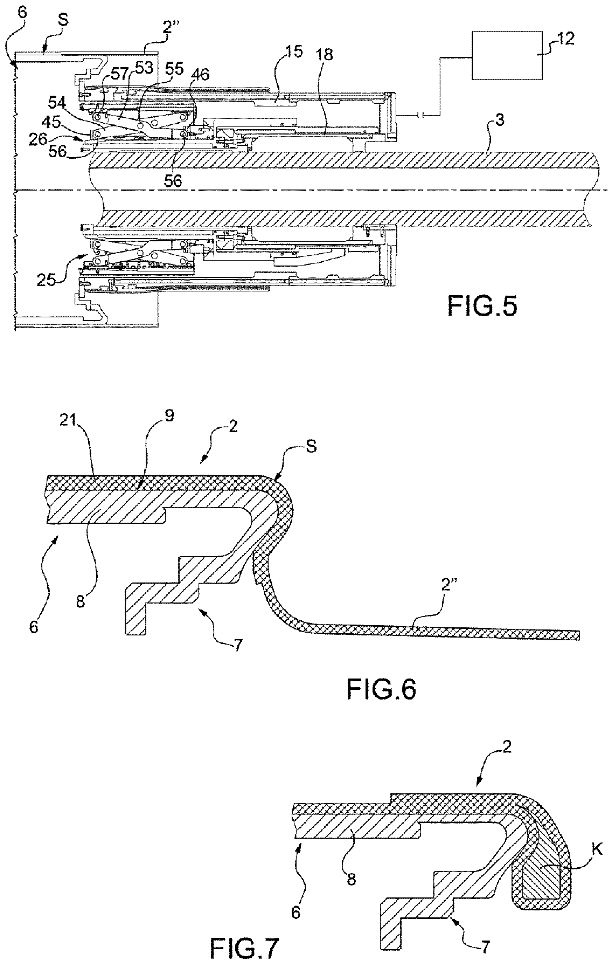

In Figure 1, the number 1 designates, as a whole, a building group for building a tyre carcass 2 (Figures 6 and 7). The group 1 comprises a motor-driven supporting shaft 3, axially fixed and rotatable about its own axis 4 under the thrust of an actuator 5, schematically shown in Fig. 1.

The group 1 also comprises a building drum 6, known in itself and not described in detail, which surrounds the shaft 3 and is coupled to the shaft 3 itself coaxially to the axis 4 in an axially and angularly fixed position, so as to rotate in unison with the shaft 3 itself.

The drum 6 has two shaped front walls 7, only one of which can be seen in Figure 1, and a tubular wall 8 externally delimited by a cylindrical surface 9 coaxial to the axis 4 and, in use, for supporting the rubber-coated plies T, only one of which is shown in Figure 1, for the building of the carcass 2.

Again with reference to Figure 1, the group 1 also comprises two building modules 10 arranged along the axis 4 on axially opposite sides of the building drum 6.

The two modules 10, which are identical to each other, each surround a corresponding stretch of the shaft 3 and are coupled to the shaft 3 itself in an angularly fixed position to rotate in unison with the drum 6.

Each module 10 comprises a corresponding hollow structure 11, which is mobile in opposite directions along the shaft 3 to and from the drum 6 under the thrust of an actuator 12, schematically shown, preferably an electromechanical actuator.

Each structure 11 comprises an inner tubular body 14 slidably coupled to the shaft 3 along the axis 4 in an angularly fixed position, an outer tubular body 15 surrounding the inner tubular body 14, and an annular wall 16 at the bottom, from which both tubular bodies 14 and 15 extend, overhanging, towards the corresponding front wall 7 of the building drum 6.

The outer tubular body 15 has a maximum outer diameter that is smaller than the outer diameter of the surface 9 of the drum 6.

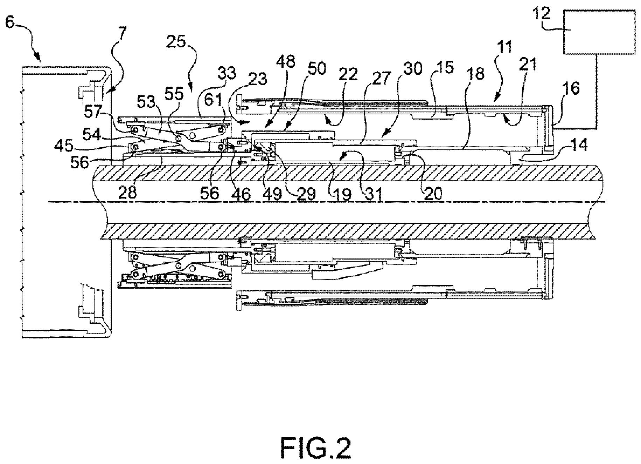

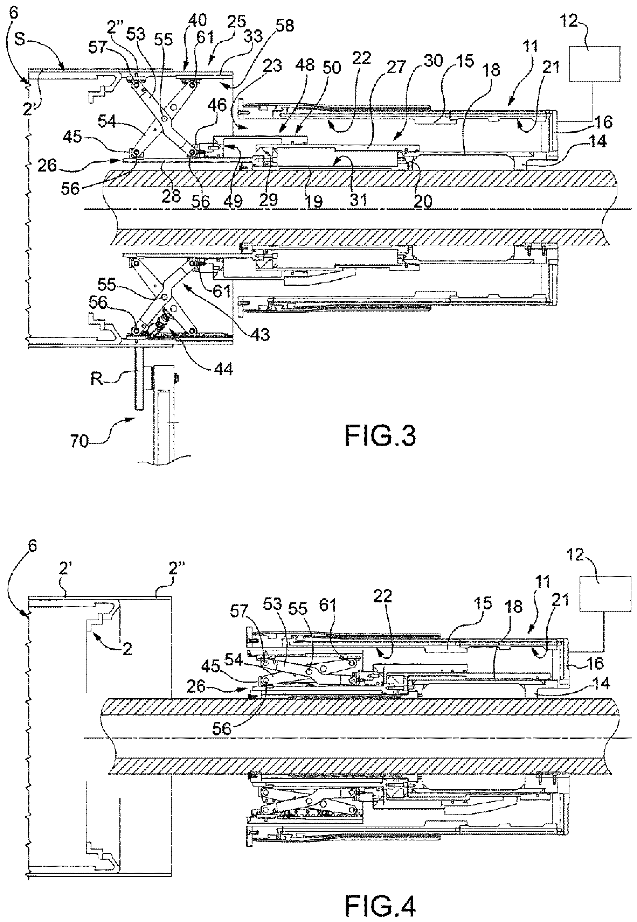

With reference to Figures 2 and 3, the inner tubular body 14 has, starting from the wall 16, one tubular stretch 18 and another tubular stretch 19, having an outer diameter smaller than the outer diameter of the first tubular stretch 18, and connected to the first tubular stretch 18 by a radial wall 20 orthogonal to the axis 3.

The outer tubular body 15 delimits, with the tubular stretches 18 and 19, the corresponding annular cavities 21 and 22 communicating with each other and, of which, the cavity 22 has an inlet opening 23 facing the corresponding front surface 7 of the drum 6.

With reference to Figure 1 again, each module 10 also comprises a corresponding collapsible building can 25 that, in turn, comprises its own tubular shaft or hub 26 for attachment and support, which surrounds the inner tubular body 14, coaxially to the axis 4, and is coupled to the inner tubular body 14 in an axially slidable manner and in an angularly fixed position. Each hub 26 has a shape that is complementary to that of the inner tubular body 14 and comprises - beginning from the wall 16 again - one tubular stretch 27 coupled to one stretch 18, so it can slide and is fluid-tight, and another tubular stretch 28 having an inner diameter less than the inner diameter of the first tubular stretch 27. One tubular stretch 27 is coupled to another tubular stretch 19 in a slidable and fluid-tight manner and is firmly connected to another tubular stretch 28 by a radial wall 29 arranged facing the radial wall 20. The tubular stretches 19 and 27 and the radial walls 20 and 29 form part of a pneumatic linear actuator 30 fully housed inside its corresponding module 10 and delimit between them a variable-volume chamber 31 of the same actuator 30. The chamber 31 is connected, in a way that is well known, to a pressurisation/depressurisation group to translate the hub 26 in opposite directions with respect to the tubular bodies 14 and 15, as will be better explained below.

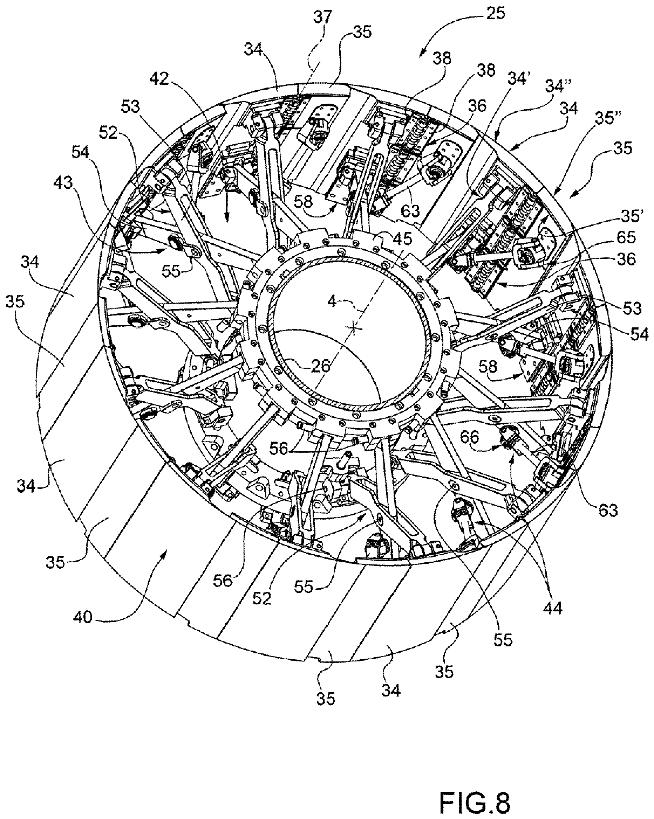

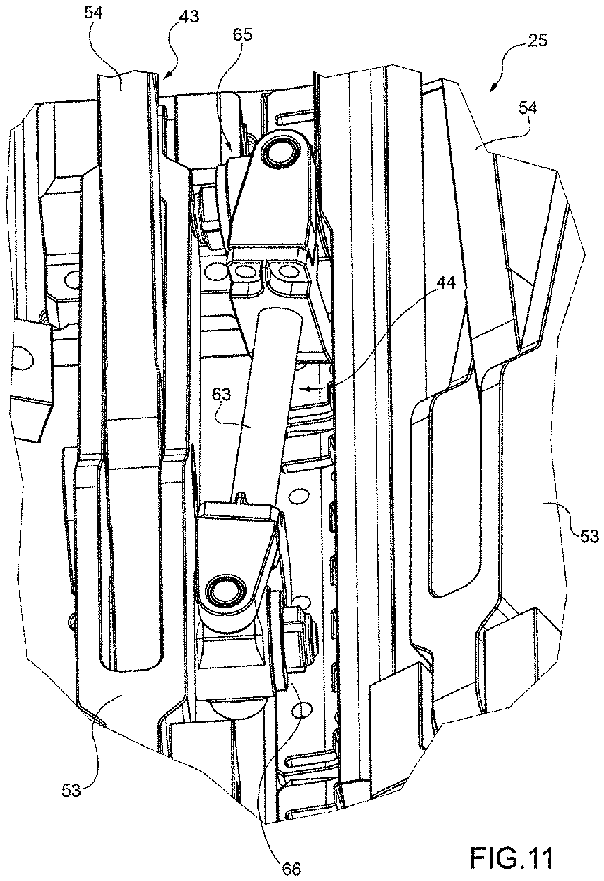

With reference to Figure 3, and, in particular, to Figures 8 to 11, each can 25 is a can that can be configured and is adapted for being arranged in two different radial configurations. One configuration is operational or radially expanded and of maximum diameter, shown in Figures 3, 8, and 10, wherein it has an outer diameter equal to the outer diameter of the drum 6, and one is resting or radially collapsed and of minimum diameter, shown in Figures 1,2,4,5,9, and 11. When arranged in their resting configurations, the overall dimensions of each can 25 are such that it can be fully housed inside its corresponding cavity 22 through its corresponding inlet 23, as can be seen in Figures 1, 4, and 5.

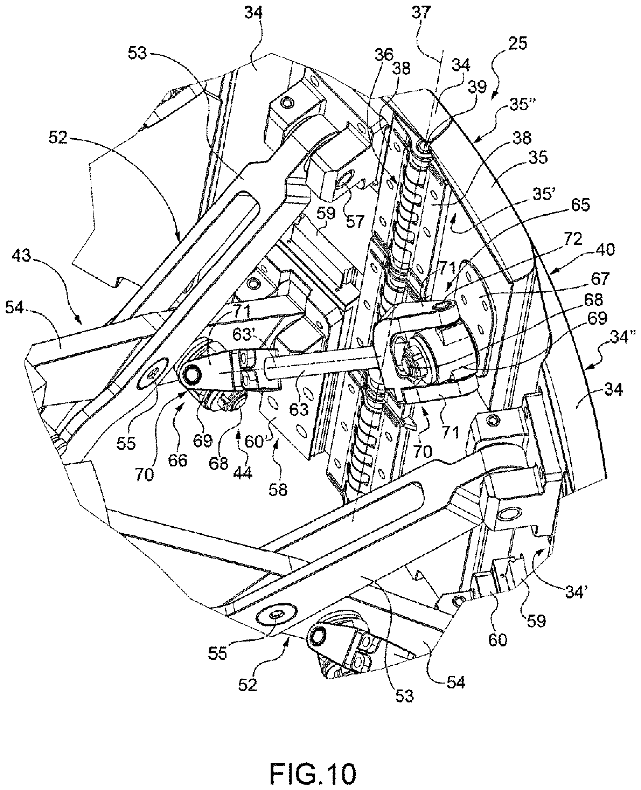

With reference to Figures 8 to 11, each can 25 comprises a corresponding sleeve 33 for supporting part of the plies T during the building of the carcass 2, as will be better described below. Each sleeve 33 surrounds the tubular stretch 28 of the corresponding attachment hub 26 coaxially to the axis 4 and comprises a ring of tile-like segments 34 and a ring of segments 35 circumferentially alternating with the first segments 34. Each of the first segments 35 is coupled to a second segment 34 adjacent to it by means of a corresponding hinge 36 having a hinge axis 37 that is mobile parallel to the axis 4. In particular, each hinge 36 is arranged within the sleeve 33 and comprises two wings 38 firmly connected to the inner surfaces 34' and 35' of the corresponding segments 34 and 35 and a hinge pin 39 coaxial to the axis 37 and intersected by the prolongation of the inner surfaces 34' and 35' themselves (Figure 10).

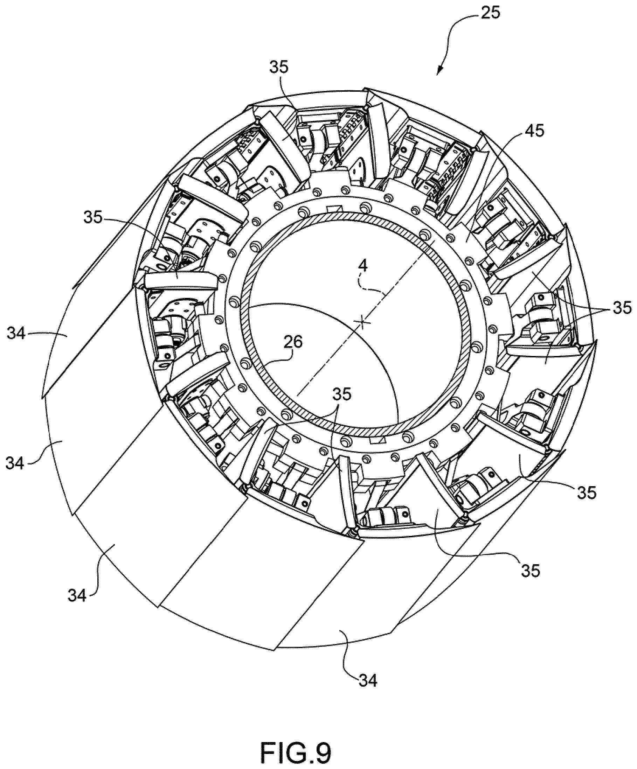

When the can 25 is arranged in its expanded configuration, the corresponding segments 34 and 35 are placed next to each other, circumferentially and seamlessly, and their outer surfaces 34" and 35" each define a portion of an outer cylindrical surface 40 for supporting the sheets T, as can be clearly seen in Figure 8. When, instead, the can 25 is arranged in its contracted condition, the corresponding segments 34 have partially overlapping end portions, while the other segments 35 extend towards the axis 4 in substantially radial directions and, each, in a position substantially orthogonal to the segment 34 to which it is hinged, as can be seen in Figure 9.

With reference to Figures 8 to 11 again, each of the drums 25 also comprises a motor-driven group 42 for displacing the segments 34 and 35 to and from the axis 4. Each group 42 comprises, in turn, a motor-driven pantograph device 43 for radially displacing the corresponding segments 34 in radial directions between a retracted resting position wherein the segments 34 are set alongside the corresponding axis and an extracted operating position wherein they define the corresponding surface 40, and a device 44 for rotating the first segments 35 with respect to the corresponding segments 34 about the respective hinge axes 37.

Each device 43 comprises two of its own annular bodies 45 and 46 (Figure 3), which surround the stretch 28 of its corresponding attachment hub 26 coaxially to the axis 4. The annular body 45 is firmly connected to a free end portion of the corresponding stretch 28, while the annular body 46 is axially spaced from the tubular body 45 and is slidably coupled to the same stretch 28 and in an angularly fixed position. One tubular body 46 is mobile to and from another tubular body 45 under the thrust of a hydraulic actuator 48, which is always at least partially housed in its corresponding cavity 22 and passes through its corresponding inlet 23. Each pneumatic actuator 48 has a corresponding variable-volume chamber 49 connected to a pressurisation/depressurisation circuit that cannot be seen in the attached figures; preferably, each chamber 49 is delimited by a portion of its corresponding stretches 27 and 28 and by the radial wall 29, on the one hand, and by a corresponding tubular body 50, on the other. Each tubular body 50 is coupled to the corresponding stretches 27 and 28 in a fluid-tight manner and has a sliding end portion, which is slidably coupled to the corresponding stretch 28 and is firmly, mechanically connected to the corresponding annular body 46.

Each device 43 comprises, then, for each segment 34, a corresponding pantograph transmission 52, in turn, comprising two arms 53 and 54 arranged in an X (Figures 3, 8, and 10) and having their corresponding intermediate portions pivoted between them via a pivot pin 55 for rotating about a corresponding pin axis orthogonal to the corresponding hinge axis 37; the arms 53 and 54 having respective end portions facing the annular bodies 45 and 46 each hinged to one of the annular bodies 45 and 46 themselves via corresponding pins 56 (Figures 1, 3, and 8) parallel to the pin 55 for rotating about the axes of the corresponding pins 56 and corresponding opposite end portions coupled to the corresponding segment 34. In particular, with reference to Figures 3 and 10, each arm 53 is hinged to the relative segment 34 via a corresponding pin 57 parallel to the pin 55 for rotating about the pin axis 57, while the arm 54 is coupled to the corresponding segment 34 via a guide-and-slide assembly 58. Each guide-and-slide assembly 58 comprises a straight guide 59 parallel to the axis 4 and orthogonal to the corresponding pivot pin 55 and a slide 60, which is slidable along the guide 59, and to which the free end of the corresponding arm 54 is hinged via a pin 61 parallel to the corresponding pins 55 and 56.

With reference to the Figures 8, 10, and 11 again, each segment 35 rotation device 44 comprises for each segment 35 a corresponding tension-rod/strut 63, which extends diagonally between the corresponding segment 35 and a corresponding arm 54 and has an end portion coupled to the surface of the corresponding segment 35 via a joint or articulation 65, and to the corresponding arm 54 via a joint or articulation 66. The articulation 66 is arranged between its corresponding pivot pin 55 and the corresponding segment 35.

With reference to Figure 10, each joint 65 preferably comprises an attachment plate 67 rested on the inner surface 35' of the corresponding segment 35 and firmly connected to the same segment 35, a pivot pin 68 attached to the plate 67 and extending orthogonally to the same plate 67, and an attachment head 69 idly rotatable on the pin 68 and axially locked on the pin 68 itself. Each joint 65 then comprises a fork 70, the arms 71 of which extend from opposite sides of the head 69 and are hinged to the head 69 itself by means of a pin 72 orthogonal to the pivot pin 68. The fork 70 has a crossbar that is rotatably coupled to the end of the tension-rod/strut 63 about an axis 63' of the tension-rod/strut 63 and in a fixed position along the axis 63' itself.

Also with reference to Figure 8, each first joint 66 is similar to the second joint 65 and, for this reason, the different parts of the first joint 66 are marked with the same reference numbers used to distinguish the corresponding parts of the second joint 65. The first joint 66 differs from the second joint 65 in that it lacks the plate 67, in that the pivot pin 68 is directly and firmly connected to the arm 54, and in that the tension-rod/strut 63 is firmly connected to the fork 70.

In use, beginning from the condition wherein the sleeves 33 of the cans 25 are arranged in their contracted position, the cans 25 are displaced and each is set alongside a corresponding front surface 7 of the drum 6, after which, the group 42 is driven and the segments 34 and 35 progressively and simultaneously spaced from the axis 4. In particular, all the segments 34 and 35 are displaced by driving only the linear actuator 48, which, by bringing the annular bodies 46 nearer together, displaces the segments 34 outwards in a radial direction via the pantograph transmissions 52. Simultaneously to the radial displacement of the segments 34, the corresponding device 44 rotates, each of the segments 35 about its corresponding axis 37 with respect to the corresponding segment 34. Each device 44 is configured so as that when the segments 34 reach their operating position, the segments 35 are also arranged in the desired operating position and define, together with the segments 34, the corresponding, above-mentioned supporting surface 40. When this position is reached, each can 25 is pushed against its corresponding front wall 7 until it forces its sleeve against the drum 6. In this position the surfaces 40 define an axial prolongation of the outer surface of the building drum 6 without any discontinuity in the passage areas between the building drum 2 and the cans 25.

At this point, the plies T are advanced and pressed in a way known in itself, via the device 70 producing the semi-finished product S. When pressing is completed, both actuators 30 and 48 are depressurized and the radially contracted cans progressively bringing them back, each one, to its contracted position, letting the portions 2" of the semi-finished product S protrude, overhanging, from the drum 6.

From the above it is clear that, compared to the known solutions, the semi-finished products S produced using the cans 25 described are not only homogeneous, but without any streak or other localised defect and, therefore, of high and unvarying quality.

The above is a consequence of the particular way in which the cans are produced.

In particular, the pantograph device 43 always ensures a precise radial positioning of the segments 35 irrespective of the number of opening/closing cycles of the cans 25, avoiding any misalignment between the outer surfaces of the segments 35 and the outer surface of the drum 6.

The positioning accuracy of the segments 34 compared to the drum 2 is then increased by the simplicity of producing the pantograph device that comprises only one pair of arms forming an X for each segment 34 and only one actuator for all the pairs of arms forming an X.

The quality of the semi-finished products S is also ensured by the fact that each of the segments 35 is hinged to a corresponding segment 34 and, therefore, one of its end portions follows the segment 34 to which it is hinged without any chance of error, while the position of one of its free end portions is controlled by a rigid mechanical device. At each opening of the can, this rigid device always brings the free end portion of the corresponding segment 35 against an adjacent segment 34, always ensuring continuity between two consecutive segments, as clearly visible in Figure 10.

Finally, the cans 25 being radially collapsible cans, these, during the displacement towards their contracted position, abandon the corresponding portion of the semi-finished product without generating axial actions or scrapings. When arranged in their contracted position, they have minimum overall dimensions that make it easier to handle and displace them even in confined spaces.

The handling and displacement of the cans 25 are also facilitated by the low weight of the cans 25 themselves, which is largely due to the features of the supporting group 42 and handling of the segments 34 and 35.

From the above it is clear that modifications and variations may be made without departing from the scope of the independent claim.

In particular, the segments 35 could rotate about their corresponding axes 37 under the thrust of an actuator other than the actuator driving the segments 34 and, therefore, the mode of synchronizing the displacement of the first segments 35 with the second segments 34 could be different.

## Claims

1. A building can (25) for building a tyre carcass (2); the can comprising an attachment shaft (26) having an axis thereof and a sleeve (33) surrounding said attachment shaft coaxially to the axis, wherein said sleeve comprises a ring of first tile-like segments (34) and a ring of second tile-like segments (35) circumferentially alternating with the first segments; each said second segment being hinged to a corresponding said first segment so as to rotate with respect to the corresponding said first segment about a hinge axis parallel to said axis; first actuator means (30) being provided for radially displacing said first segments between an extracted position where they are spaced apart from said shaft, and wherein they delimit part of a cylindrical carcass-building surface, and a retracted position, wherein they are arranged adjacent to said shaft; **characterised by** second actuator means (48) being provided for rotating each said second segment with respect to the corresponding said first segment about the respective hinge axis between a resting position and an operating position, and wherein the second segments extend between said first segments to form the remaining part of said cylindrical carcass-building surface.

2. The can according to Claim 1, **characterized in that** said first actuator means comprise, for each said first segment, a pantograph transmission interposed between said shaft and the corresponding said first segment.

3. The can according to Claim 2, **characterized in that** said first actuator means comprise a first and a second annular body that surround said attachment shaft coaxially to said axis and are coupled to said pantograph transmission; said first annular body being firmly connected to said attachment shaft, and said second annular body being axially slidably coupled to said attachment shaft and in an angularly fixed position; said first actuator means further comprising a linear actuator connected to said second annular body for translating the second annular body in opposite directions from and towards said first annular body.

4. The can according to Claim 3, **characterized in that** said pantograph transmission comprises, for each said first segment, a pair of arms forming an X, having intermediate portions hinged together so as to rotate about a corresponding fulcrum axis orthogonal to the corresponding said hinge axis and parallel to the respective said fulcrum axis; said arms having respective end portions facing said annular bodies, each hinged to one of the annular bodies so as to rotate about respective axes parallel to the corresponding said fulcrum axis and respective opposite end portions coupled to the corresponding said first segment.

5. The can according to Claim 4, **characterized in that** one of said arms is hinged to the corresponding said first segment so as to rotate about an axis parallel to said fulcrum axis, and the other of said arms is coupled to the corresponding said first segment via a guide-and-slide assembly having a guide parallel to the axis of said attachment shaft.

6. The can according to any one of the Claims 3 to 5, **characterized in that** said actuator also drives said second actuator means.

7. The can according to Claim 4 or Claim 5, **characterized in that** said second actuator means comprise, for each said second segment, a tension-rod/strut interposed between the corresponding said second segment and one of said arms.

8. The can according to Claim 7, **characterized in that** it comprises an articulated joint for connecting each said tension-rod/strut to the corresponding said arm; said joint being arranged at a point of said arm ranging between the corresponding said first segment and the corresponding said fulcrum axis.

9. The can according to Claim 6, **characterized in that** a stretch of said attachment shaft forms part of said linear actuator.

10. The can according to Claim 9, **characterized in that** said first actuator means comprise a tubular body surrounding said supporting shaft; said tubular body being connected to said second annular body and coupled to said attachment shaft in a fluid-tight manner and forming part of said linear actuator.

11. The can according to Claim 3, **characterized in that** said linear actuator is a pneumatic actuator.

12. The can according to any one of the preceding claims, **characterized in that** each said second segment is substantially orthogonal to the corresponding said first segment when it is arranged in its resting position.

## Patentansprüche

1. Eine Aufbautrommel (*building can*) (25) zum Aufbau einer Reifenkarkasse bzw. eines Reifenrohlings (2); wobei die Trommel eine Befestigungswelle (26) umfasst, die eine Achse derselben und eine Hülse (33) aufweist, die die genannte Befestigungswelle koaxial zur Achse umgibt, wobei die genannte Hülse einen Ring aus ersten kachelartigen Segmenten (34) und einen Ring aus zweiten kachelartigen Segmenten (35) umfasst, die sich in Umfangsrichtung mit den ersten Segmenten abwechseln; wobei jedes genannte zweite Segment an einem entsprechenden genannten ersten Segment gelenkig angebracht ist, sodass es sich in Bezug auf das entsprechende genannte erste Segment um eine zur genannten Achse parallele Gelenkachse dreht; wobei erste Betätigungsmittel (30) bereitgestellt werden, um die genannten ersten Segmente radial zu verschieben zwischen einer ausgezogenen Position, in der sie von der genannten Welle beabstandet sind und in der sie einen Teil einer zylindrischen Karkassen-Bildungsfläche begrenzen, und einer eingezogenen Position, in der sie neben der genannten Welle angeordnet sind;
**gekennzeichnet durch** zweite Betätigungsmittel (48), die bereitgestellt werden, um jedes genannte zweite Segment relativ zum entsprechenden genannten ersten Segment um die jeweilige Gelenkachse zwischen einer Ruheposition und einer Betriebsposition zu drehen, und
wobei sich die zweiten Segmente zwischen den genannten ersten Segmenten erstrecken, um den restlichen Teil der genannten zylindrischen karkassenbildenden Oberfläche zu bilden.

2. Die Trommel nach Anspruch 1, **dadurch gekennzeichnet, dass** die genannten ersten Betätigungsmittel für jedes genannte erste Segment eine Pantographen-Übertragung umfassen, die zwischen der genannten Welle und dem entsprechenden genannten ersten Segment angeordnet ist.

3. Die Trommel nach Anspruch 2, **dadurch gekennzeichnet, dass** die genannten ersten Betätigungsmittel einen ersten und einen zweiten ringförmigen Körper umfassen, die die genannte Befestigungswelle koaxial zur genannten Achse umgeben und mit der genannten Pantographen-Übertragung gekoppelt sind; wobei der genannte erste ringförmige Körper fest mit der genannten Befestigungswelle verbunden ist und der genannte zweite ringförmige Körper axial verschiebbar mit der genannten Befestigungswelle gekoppelt ist und sich in einer winkelförmig fixierten Position befindet; wobei die genannten ersten Betätigungsmittel ferner einen Linearaktuator umfassen, der mit dem genannten zweiten ringförmigen Körper verbunden ist, um den zweiten ringförmigen Körper in entgegengesetzte Richtungen von und zu dem genannten ersten ringförmigen Körper zu bewegen.

4. Die Trommel nach Anspruch 3, **dadurch gekennzeichnet, dass** die genannte Pantographen-Übertragung für jedes genannte erste Segment ein Paar Arme umfasst, die ein X bilden und Zwischenabschnitte aufweisen, die gelenkig miteinander verbunden sind, sodass sie sich um eine entsprechende Drehpunkt-Achse drehen, die orthogonal zur entsprechenden genannten Gelenkachse und parallel zur jeweiligen genannten Drehpunkt-Achse verläuft; wobei die genannten Arme jeweilige Endabschnitte aufweisen, die den genannten ringförmigen Körpern zugewandt sind und jeweils gelenkig mit einem der ringförmigen Körper verbunden sind, sodass sie um jeweilige Achsen drehen, die zur entsprechenden genannten Drehpunkt-Achse parallel verlaufen, und jeweilige gegenüberliegende Endabschnitte, die mit dem entsprechenden genannten ersten Segment gekoppelt sind.

5. Die Trommel nach Anspruch 4, **dadurch gekennzeichnet, dass** einer der genannten Arme am entsprechenden genannten ersten Segment angelenkt ist, sodass er sich um eine Achse parallel zur genannten Drehpunkt-Achse dreht, und der andere der genannten Arme mit dem entsprechenden genannten ersten Segment über eine Führungs- und Verschiebe-Anordnung gekoppelt ist, die eine Führung parallel zur Achse der genannten Befestigungswelle aufweist.

6. Die Trommel nach einem der Ansprüche 3 bis 5, **dadurch gekennzeichnet, dass** der genannte Aktuator auch die genannten zweiten Betätigungsmittel antreibt.

7. Die Trommel nach Anspruch 4 oder Anspruch 5, **dadurch gekennzeichnet, dass** die genannten zweiten Betätigungsmittel für jedes genannte zweite Segment eine Zugstange/Strebe umfassen, die zwischen dem entsprechenden genannten zweiten Segment und einem der genannten Arme angeordnet ist.

8. Die Trommel nach Anspruch 7, **dadurch gekennzeichnet, dass** sie eine Gelenkverbindung zum Verbinden jeder genannten Zugstange/Strebe mit dem entsprechenden genannten Arm umfasst, wobei die genannte Gelenkverbindung an einem Punkt des genannten Arms angeordnet ist, der zwischen dem entsprechenden genannten ersten Segment und der entsprechenden genannten Drehpunkt-Achse liegt.

9. Die Trommel nach Anspruch 6, **dadurch gekennzeichnet, dass** ein Abschnitt (*stretch*) der genannten Befestigungswelle einen Teil des genannten Linearaktuators bildet.

10. Die Trommel nach Anspruch 9, **dadurch gekennzeichnet, dass** die genannten ersten Betätigungsmittel einen rohrförmigen Körper umfassen, der die genannte Stützwelle umgibt; wobei der genannte rohrförmige Körper mit dem genannten zweiten ringförmigen Körper verbunden und mit der genannten Befestigungswelle fluiddicht gekoppelt ist und einen Teil des genannten Linearaktuators bildet.

11. Die Trommel nach Anspruch 3, **dadurch gekennzeichnet, dass** der genannte Linearaktuator ein pneumatischer Aktuator ist.

12. Die Trommel nach irgendeinem der vorstehenden Ansprüche, **dadurch gekennzeichnet, dass** jedes genannte zweite Segment im Wesentlichen orthogonal zum entsprechenden genannten ersten Segment ist, wenn es in seiner Ruheposition angeordnet ist.

## Revendications

1. Bac de construction (25) pour la construction d'une carcasse de pneu (2) ; le bac comprenant un arbre d'attache (26) ayant un axe de celui-ci et un fourreau (33) entourant ledit arbre d'attache coaxialement à l'axe, dans lequel ledit fourreau comprend une couronne de premiers segments de type tuile (34) et une couronne de seconds segments de type tuile (35) alternant circonférentiellement avec les premiers segments ; chacun desdits seconds segments étant fixé par charnière à l'un correspondant desdits premiers segments de façon à tourner vis-à-vis dudit premier segment correspondant autour d'un axe de charnière parallèle audit axe ; des premiers moyens d'actionneur (30) qui sont prévus pour déplacer radialement lesdits premiers segments entre une position extraite où ils sont espacés dudit arbre, et dans laquelle ils délimitent une partie d'une surface de construction de carcasse cylindrique, et une position rétractée, dans laquelle ils sont agencés adjacents audit arbre ; **caractérisé par** des seconds moyens d'actionneur (48) qui sont prévus pour faire tourner chacun desdits seconds segments vis-à-vis dudit premier segment correspondant autour de l'axe de charnière respectif entre une position de repos et une position de fonctionnement, et
dans lequel les seconds segments s'étendent entre lesdits premiers segments pour former la partie restante de ladite surface de construction de carcasse cylindrique.

2. Bac selon la revendication 1, **caractérisé en ce que** lesdits premiers moyens d'actionneur comprennent, pour chacun desdits premiers segments, une transmission par pantographe interposée entre ledit arbre et ledit premier segment correspondant.

3. Bac selon la revendication 2, **caractérisé en ce que** lesdits premiers moyens d'actionneur comprennent un premier et un second corps annulaire qui entourent ledit arbre d'attache coaxialement audit axe et sont couplés à ladite transmission par pantographe ; ledit premier corps annulaire étant solidement raccordé audit arbre d'attache, et ledit second corps annulaire étant couplé de manière axialement coulissante audit arbre d'attache et dans une position angulairement fixe ; lesdits premiers moyens d'actionneur comprenant en outre un actionneur linéaire raccordé audit second corps annulaire pour une translation du second corps annulaire dans des directions opposées depuis et vers ledit premier corps annulaire.

4. Bac selon la revendication 3, **caractérisé en ce que** ladite transmission par pantographe comprend, pour chacun desdits premiers segments, une paire de bras formant un X, ayant des portions intermédiaires fixées par charnière ensemble de façon à tourner autour d'un axe d'appui correspondant orthogonalement audit axe de charnière correspondant et parallèlement audit axe d'appui respectif ; lesdits bras ayant des portions d'extrémité respectives face auxdits corps annulaires, chacune fixée par charnière à l'un des corps annulaires de façon à tourner autour d'axes respectifs parallèlement audit axe d'appui correspondant et des portions d'extrémité opposées respectives couplées audit premier segment correspondant.

5. Bac selon la revendication 4, **caractérisé en ce que** l'un desdits bras est fixé par charnière audit premier segment correspondant de façon à tourner autour d'un axe parallèlement audit axe d'appui, et l'autre desdits bras est couplé audit premier segment correspondant via un ensemble de guidage et de coulissement ayant un guide parallèle à l'axe dudit arbre d'attache.

6. Bac selon l'une quelconque des revendications 3 à 5, **caractérisé en ce que** ledit actionneur entraîne également lesdits seconds moyens d'actionneur.

7. Bac selon la revendication 4 ou la revendication 5, **caractérisé en ce que** lesdits seconds moyens d'actionneur comprennent, pour chacun desdits seconds segments, une tige/barre de tension interposée entre ledit second segment correspondant et l'un desdits bras.

8. Bac selon la revendication 7, **caractérisé en ce qu'**il comprend un joint articulé pour raccorder chacune desdites tiges/barres de traction audit bras correspondant ; ledit joint étant agencé en un point dudit bras dans une plage entre ledit premier segment correspondant et ledit axe d'appui correspondant.

9. Bac selon la revendication 6, **caractérisé en ce qu'**une extension dudit arbre d'attache forme une partie dudit actionneur linéaire.

10. Bac selon la revendication 9, **caractérisé en ce que** lesdits premiers moyens d'actionneur comprennent un corps tubulaire entourant ledit arbre de support ; ledit corps tubulaire étant raccordé audit second corps annulaire et couplé audit arbre d'attache de manière étanche au fluide et formant une partie dudit actionneur linéaire.

11. Bac selon la revendication 3, **caractérisé en ce que** ledit actionneur linéaire est un actionneur pneumatique.

12. Bac selon l'une quelconque des revendications précédentes, **caractérisé en ce que** chacun desdits seconds segments est sensiblement orthogonal audit premier segment correspondant lorsqu'il est agencé dans sa position de repos.
